# DEMANDE DE BREVET EUROPEEN

(11) **EP 1 808 415 A1**
(43) Date de publication de la demande: **18.07.2007**
(21) Numéro de dépôt: 06022112.4
(22) Date de dépôt: 21.10.2006
(51) Int. Cl.: C02F 1/48, B03C 1/28

(54) **Dispositif de désembouage électro-magnétique**

(30) Priorité: 13.01.2006 FR 0600598
(71) Demandeur: Etablissements Charot SA, 89100 Sens (FR)
(72) Inventeur:
(74) Mandataire: Bentz, Jean-Paul

(57) **Abrégé**

Dispositif de désembouage (1) destiné à l'élimination de boues constituées de particules métalliques, et non métalliques, se formant par corrosion dans un circuit hydraulique, notamment de chauffage, le dispositif comprenant une cuve (2) munie d'une entrée (3) et d'une sortie (4) du circuit, associée à des moyens d'aimantation aptes à capter les particules métalliques et à des moyens de libération et d'évacuation de celles-ci après décantation, caractérisé en ce que les moyens de captation magnétiques sont constitués par au moins un électroaimant (8).

## Description

La présente invention concerne un dispositif de désembouage destiné à l'élimination des boues dans un circuit hydraulique, notamment de chauffage ou de climatisation.

Un phénomène connu dans ce type d'installation réside dans le fait que des boues sont générées par le circuit lui-même.

En effet, le circuit, qu'il s'agisse des tuyaux ou des radiateurs, dans le cas d'une installation de chauffage central, est métallique et subit une corrosion par la présence de l'eau en circulation dans ledit circuit.

Il s'agit en fait d'une interaction entre le métal et son environnement, qui est l'eau, qui provoque l'attaque du matériau et la perte progressive de ses propriétés d'origine. En présence de l'eau, cette interaction est de nature électro-chimique, c'est-à-dire que les phénomènes répondent tant aux lois de la chimie que de l'électricité. C'est ainsi que les particules de fer, à la surface de l'élément métallique, auront tendance à se dissoudre dans l'eau sous forme de particules. Ce sont ces particules de fer qui, mélangées aux particules de calcaires, en présence dans l'eau et formant à terme le tartre, finissent par générer les boues évoquées ci-dessus.

Celles-ci sont la cause principale des défectuosités des chaudières, provocant des pertes de rendement pouvant aller jusqu'à 15%, quand elles n'obstruent pas complètement un ou plusieurs points de la tuyauterie, s'opposant donc à la circulation de l'eau et donc au chauffage d'un ou plusieurs radiateurs.

Ces boues doivent donc être nécessairement éliminées et évacuées du circuit, sous peine de graves difficultés.

C'est ainsi que sont apparus des dispositifs de désembouage, dits également désemboueurs, destinés à l'élimination de ces boues, et qui comprennent une cuve de décantation associée à des moyens d'aimantation aptes à capter les particules métalliques, et associée également à des moyens de libération et d'évacuation de celle-ci après décantation.

Les appareils connus de ce type comportent par exemple une pluralité de plaques magnétiques, regroupées sur un module amovible pouvant être extrait de la cuve, à intervalles réguliers, afin de procéder à son nettoyage à l'aide d'un jet d'eau.

On comprendra qu'un tel système, même si efficace, nécessite une intervention humaine et donc une main- d'oeuvre et des temps d'intervention coûteux. L'installation n'est donc pas autonome.

Un autre dispositif connu permet de résoudre cet inconvénient en disposant les éléments magnétiques de captation des particules métalliques à l'extérieur de la cuve.

Mais, si ce dernier dispositif ne nécessite pas l'ouverture de la cuve, il nécessite toujours l'intervention humaine du fait que, pour que les particules captées contre la paroi interne de la cuve tombent au fond de celle-ci, il est nécessaire d'écarter les éléments magnétiques de la surface externe de la cuve.

Ce système nécessite encore une fois une mise en mouvement mécanique ou électrique des éléments magnétiques. Donc il n'est pas autonome.

Un autre dispositif prévoit de nettoyer des éléments magnétiques immergés dans la cuve par une intervention manuelle, mais sans démontage, en remontant les éléments magnétiques à l'intérieur d'un prolongement supérieur de la cuve, et en lui impliquant un mouvement de montée et de descente devant une rampe de jet d'eau.

Mais encore une fois, même si l'intervention est externe, l'élément magnétique doit subir un mouvement de translation verticale.

La présente invention a pour but de remédier à l'ensemble des inconvénients des dispositifs de désembouage connus cités ci-dessus, et concerne à cet effet un dispositif de désembouage destiné à l'élimination de boues constituées de particules métalliques, et non métalliques, se formant par corrosion dans un circuit hydraulique, notamment de chauffage, le dispositif comprenant une cuve munie d'une entrée et d'une sortie du circuit, associée à des moyens d'aimantation aptes à capter les particules métalliques et à des moyens de libération et d'évacuation de celles-ci après décantation, caractérisé en ce que les moyens de captation magnétiques sont constitués par au moins un électro-aimant.

Il est ainsi réalisé un dispositif de désembouage permanent du circuit hydraulique concerné, permettant le captage automatique des boues, sans ouverture de l'appareil, ni actionnement d'éléments mobiles car automatiques et entièrement statiques.

Le dispositif selon invention permet également la captation des particules, leur libération s'effectuant par l'intermédiaire d'un même électro-aimant, selon qu'il est respectivement alimenté en courant électrique ou non, pour une automatisation des deux fonctions.

On comprend bien l'intérêt de l'invention qui permet l'élimination en continu des boues ferreuses en suspension dans l'eau, sans introduction d'oxygène dans le circuit traité car on ne l'ouvre pas, qui serait également source de corrosion.

Préférentiellement, les électro-aimants fixes selon l'invention sont placés à l'intérieur de la cuve, mais ils pourraient tout aussi bien l'être à l'extérieur pour la réalisation d'un désemboueur autonome et auto-nettoyant, ne nécessitant aucune intervention humaine.

Egalement, les électro-aimants pourraient être disposés à l'intérieur même de la cuve, mais partiellement ou totalement imergés dans l'eau, grâce à une isolation électrique.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente une vue en coupe longitudinale d'un désemboueur selon l'invention.
La figure 2 représente une vue de dessus d'un désemboueur selon la figure 1.
La figure 3 représente une vue de dessus d'un désemboueur de plus grandes dimensions selon une variante de réalisation.

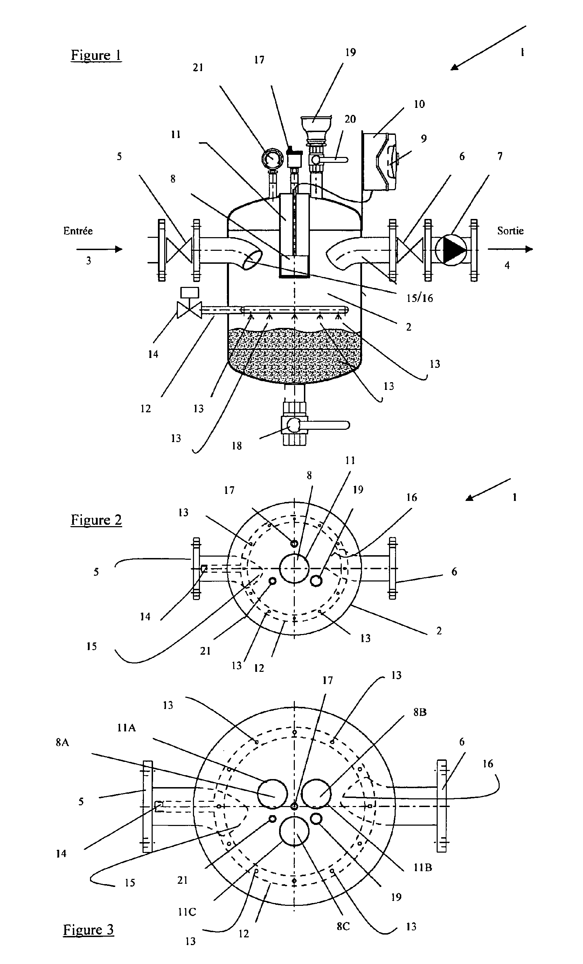

Le dispositif de désembouage ou désemboueur 1 représenté sur la figure 1 est constitué d'une cuve 2. Les entrées 3 et les sorties 4 sont munies de vannes d'isolement 5 et 6, qui seront manoeuvrées en fermeture lors de la vidange de la cuve, après décantation des particules captées puis libérées.

L'installation dispose également d'un circulateur 7 disposé en sortie 4 de la cuve, après la vanne d'isolement 6.

Selon l'invention, une telle cuve, connue en soi, est associée à des moyens d'aimantation aptes à capter les particules magnétiques, et à des moyens de libération et d'évacuation de celle-ci, après décantation. Ces moyens sont constitués par au moins un élément électro-magnétique 8.

L'avantage majeur dans l'utilisation d'un électro-aimant plutôt que d'aimant permanent selon l'art antérieur réside dans le fait que la captation des particules métalliques puis leur libération s'effectuent par l'intermédiaire d'un même électro-aimant 8, selon qu'il est respectivement alimenté en courant électrique ou non, pour une automatisation de ces deux fonctions, en laissant la surface d'aimantation toujours propre et assurant une efficacité à 100% du dispositif.

Ainsi, ce dispositif permet non seulement le captage des particules métalliques et leur retenue, mais le rend également auto-nettoyant et autonome, c'est-à-dire sans aucune intervention humaine, selon le but recherché, car le captage puis la libération des particules métalliques sont des opérations automatiques, et leur élimination, ainsi que celle des particules non métalliques, formant dans leur ensemble les boues, s'effectue sans ouverture de la cuve, sinon celle d'une vanne de vidange située à chaque partie inférieure.

Ainsi il est obtenu un désembouage permanent du circuit hydraulique et l'élimination en continu des particules métalliques ou non métalliques en suspension dans l'eau, par décantation, ceci sans introduction d'oxygène dans le circuit traité, ce qui constituerait une source supplémentaire de corrosion, car on n'ouvre pas la cuve.

Le fonctionnement de l'électro-aimant 8 est assuré selon un cycle prédéterminé, par l'intermédiaire d'un programmateur 9 associé à la source d'alimentation électrique 10.

Ce cycle pourrait s'effectuer à partir d'une alimentation électrique de l'électro-aimant, par exemple selon une durée de deux heures, au cours de laquelle ce dernier assure le captage des particules métalliques, suivie d'un quart d'heure de coupure de l'alimentation électrique de l'aimant, permettant l'élimination puis l'évacuation des particules métalliques captées.

Comme le montre la figure 1, l'électro-aimant 8 est fixe et placé à l'intérieur d'un logement borgne et étanche 11 formant un puits, pénétrant à l'intérieur de la cuve 2, tout en étant isolé du contenu de celle-ci de manière à ce que l'électro-aimant 8 soit au coeur de celui-ci, tout en étant isolé.

Selon une autre variante d'exécution non représentée, l'électro-aimant 8 est disposé fixement sur une paroi externe de la cuve 2.

Dans un cas comme dans l'autre, le puits 11 et/ou la cuve 2 sont réalisés dans un matériau amagnétique.

Selon l'exemple de réalisation représenté, l'électro-aimant 8 est unique car il s'agit d'une cuve de petites dimensions. Mais comme représenté sur la figure 3, dans le cas de cuves de plus grand diamètre, on dispose d'une pluralité d'électro-aimants 8A, 8B, 8C.

Toujours selon l'exemple de réalisation de la figure 3, les trois électro-aimants 8A, 8B, 8C sont disposés au fond de trois puits distincts 11A, 11B, 11C réalisés pour former entre eux trois angles à 120°, selon des axes verticaux parallèles.

Ainsi, et quel que soit le cas de figure, les particules ferriques ainsi libérés des champs magnétiques décanteront librement vers le fond de la cuve, ce qui laisse une surface aimantée toujours très propre, et donc d'un effet maximum.

En fait, les électro-aimants fixes peuvent être de puissance variable ou d'un nombre variable selon le débit de liquide à traiter.

Selon une autre caractéristique de l'invention, la cuve 2 comporte une rampe circulaire 12 de jets d'eau 13, disposée sous le/les puits 11 et sous les entrée 3 et sortie 4 du circuit hydraulique dans la cuve 2, les jets d'eau 13 étant orientés vers le bas pour un nettoyage optimal du fond de la cuve 2, après vidange des boues décantées.

Les jets directionnels 13 permettent non seulement de repousser la totalité des boues contenus dans la cuve, mais également une remise en pression d'eau de celle-ci en fin de cycle de vidange, avant de rouvrir le circuit par l'intermédiaire des vannes d'isolement 5 et 6.

La rampe circulaire 12 possède une vanne d'arrêt 14.

Selon une autre caractéristique de l'invention, l'entrée 3 et la sortie d'eau 4 du circuit hydraulique dans la cuve 2 s'effectuent par l'intermédiaire de deux buses 15, 16, diamétralement opposées, dirigées vers le bas et sensiblement tangentiellement à la paroi interne de la cuve, pour imposer à l'eau une circulation vers l'extérieur de la cuve 2. De cette manière est obtenu un effet cyclonique des particules non métalliques, ne pouvant être captées par l'électro-aimant 8, en vue de leur décantation vers le bas, puis leur évacuation avec l'ensemble de boues.

L'effet cyclonique est obtenu après avoir cassé la vitesse de circulation de l'eau en jouant sur le débit, du fait que l'eau arrivant d'un tube de section faible, arrive dans un réservoir de section importante.

Ainsi, les boues décantées seront accumulées dans le fond, largement dimensionné, de l'appareil, et ensuite chassées par la vidange.

Par ailleurs, le système permet également le dégazage du circuit fermé.

En effet, il comprend un purgeur automatique 17 situé au point le plus haut de la cuve 2.

Il est à signaler également que le changement de direction de la veine liquide et/ou l'effet cyclonique obtenu par la rotation de l'eau dans la cuve facilite son dégazage au point haut de la cuve.

Par ailleurs, l'ouverture de la vanne de vidange 18, placée au point le plus bas de la cuve 2, permet une évacuation complète des éléments décantés constituant les boues.

Préférentiellement, un large volume est prévu en bas de la cuve 2 pour permettre un stockage important des éléments captés et décantés, réduisant ainsi le nombre de chasse d'eau à réaliser.

Egalement, la cuve 2 comporte dans la partie haute une entrée destinée à l'introduction d'additifs dans le circuit hydraulique.

Cela pourra s'effectuer par exemple par l'intermédiaire d'un entonnoir fixe 19 ou amovible et d'une vanne d'arrêt 20.

Cet apport d'additifs s'effectuera simplement en étant véhiculé par l'eau du circuit, sans l'aide d'une pompe auxiliaire.

Selon une autre caractéristique de l'invention, la cuve 2 comporte un détecteur de niveau des boues décantées se trouvant au fond de la cuve 2, afin de limiter les vidanges au minimum.

Le dispositif comporte dans la partie haute de la cuve un pressostat 21.

Bien entendu, le pressostat 21 pourrait être remplacé par un manomètre pour une commande manuelle.

Le fonctionnement du dispositif précité sera décrit ci-après.

Le traitement de désembouage est réalisé en deux étapes distinctes.

### CYCLE 1 : Nettoyage automatique en cours de traitement

- Coupure alternative de l'alimentation électrique, par exemple un quart d'heure toutes les deux heures, du ou des électro-aimants, et arrêt du circulateur 7
- Les particules aimantées se détachent et décantent librement au fond de la cuve 2
- La surface magnétisable de l'électro-aimant 8 est libérée de toute particule ferrique
- Après une quinzaine de minutes, remise en service automatique de l'alimentation électrique avec un ou des électro-aimants très propre

### CYCLE 2 : Evacuation des boues (manuelle ou automatique selon version)

- Coupure de l'alimentation électrique
- Fermeture des vannes d'isolement 5 et 6
- Vidange de la cuve 2 et évacuation des boues
- Rinçage par les jets d'eau propres 13 de la rampe 12 orientée vers le bas
- Fermeture de la vanne de vidange 18
- Remise en eau de la cuve 2 et remise en pression du système
- Ouverture des vannes d'isolement 5 et 6
- Remise en service du ou des électro-aimants 8 avec une cuve 2 propre débarrassée de tous les dépôts
- Remise en marche du circulateur 7

Le dispositif se décline en deux versions.

### 1. VERSION SEMI-AUTOMATIQUE:

Le cycle 1 est automatique. La coupure de l'alimentation du/des électro-aimants 8 et du circulateur 7 est alors assurée automatiquement à intervalles réguliers.

Le cycle 2 est manuel. Une personne réalise le cycle à l'aide de vannes manuelles. La pression est mesurée par un manomètre.

### 2. VERSION ENTIEREMENT AUTOMATIQUE :

Les cycles 1 et 2 sont automatiques à l'aide de vannes motorisées, électrovannes et pressostat 17, l'ensemble étant géré par une armoire électrique 10 et un automate 9. Le démarrage du cycle 2 est réalisé soit par appui sur une touche, soit programmable à intervalles réglables.

## Revendications

1. Dispositif de désembouage (1) destiné à l'élimination de boues constituées de particules métalliques, et non métalliques, se formant par corrosion dans un circuit hydraulique, notamment de chauffage, le dispositif comprenant une cuve (2) munie d'une entrée (3) et d'une sortie (4) du circuit, associée à au moins un électro-aimant (8) apte à capter les particules métalliques et à libérer et évacuer celles-ci après décantation, **caractérisé en ce que** l'électro-aimant (8) est fixe et placé à l'intérieur d'un logement borgne et étanche (11) formant un puits, pénétrant à l'intérieur de la cuve (2), tout en étant isolé du contenu de celle-ci de manière à ce que l'électro-aimant (8) soit au coeur de celui-ci, tout en étant isolé.

2. Dispositif selon la revendication 1, **caractérisé en ce qu'**il dispose d'une pluralité d'électro-aimants (8A, 8B, 8C).

3. Dispositif selon la revendication 2, **caractérisé en ce qu'**il dispose de trois électro-aimants (8A, 8B, 8C), disposés au fond de trois puits distincts (11A, 11B, 11C) réalisés pour former entre eux trois angles à 120°, selon des axes verticaux parallèles.

4. Dispositif selon l'une des revendications 1 à 3, **caractérisé en ce que** la cuve (2) comporte une rampe circulaire (12) de jets d'eau (13), disposée sous le/les puits (11) et sous les entrée (3) et sortie (4) du circuit hydraulique dans la cuve (2), les jets d'eau (13) étant orientés vers le bas pour un nettoyage optimal du fond de la cuve (2), après vidange des boues décantées.

5. Dispositif selon l'une des revendications 1 à 4, **caractérisé en ce que** l'entrée (3) et la sortie d'eau (4) du circuit hydraulique dans la cuve (2) s'effectuent par l'intermédiaire de deux buses (15, 16), diamétralement opposées, dirigées vers le bas et sensiblement tangentiellement à la paroi interne de la cuve, pour imposer à l'eau une circulation vers l'extérieur de la cuve (2), de manière à obtenir un effet cyclonique des particules non métalliques, ne pouvant être captées par l'électro-aimant (8) en vue de leur décantation vers le bas puis leur évacuation avec l'ensemble de boues.

6. Dispositif selon l'une des revendications 1 à 5, **caractérisé en ce qu'**il comprend un purgeur automatique (17) situé au point le plus haut de la cuve (2).

7. Dispositif selon l'une des revendications 1 à 6, **caractérisé en ce que** la cuve (2) comporte dans la partie haute une entrée (19) destinée à l'introduction d'additifs dans le circuit hydraulique.

8. Dispositif selon l'une des revendications 1 à 7, **caractérisé en ce que** la cuve (2) comporte un détecteur de niveau des boues décantées se trouvant au fond de la cuve (2), afin de limiter les vidanges au minimum.

9. Dispositif selon l'une des revendications 1 à 8, **caractérisé en ce qu'**il comporte dans la partie haute de la cuve un pressostat (21).

10. Dispositif selon l'une des revendications 1 à 9, **caractérisé en ce que** la captation des particules métalliques puis leur libération s'effectuent par l'intermédiaire d'un même électro-aimant (8), selon qu'il est respectivement alimenté en courant électrique ou non, pour une automatisation de ces deux fonctions.

11. Dispositif selon la revendication 10, **caractérisé en ce que** le fonctionnement de l'électro-aimant (8) est assuré selon un cycle prédéterminé, par l'intermédiaire d'un programmateur (9) associé à la source d'alimentation électrique (10).
